(19) Europäisches Patentamt
European Patent Office
Office européen des brevets

(11) Numéro de publication : **0 115 449**
**B1**

# (12) FASCICULE DE BREVET EUROPÉEN

(45) Date de publication du fascicule du brevet : **06.05.87**

(51) Int. Cl.⁴ : **C 01 B 17/04**, B 01 J 37/10, B 01 J 21/04

(21) Numéro de dépôt : **84400015.8**

(22) Date de dépôt : **05.01.84**

## (54) Catalyseur d'oxydation de l'hydrogène sulfuré.

(30) Priorité : **31.01.83 FR 8301426**

(43) Date de publication de la demande : **08.08.84 Bulletin 84/32**

(45) Mention de la délivrance du brevet : **06.05.87 Bulletin 87/19**

(84) Etats contractants désignés : **AT BE DE FR GB IT NL SE**

(56) Documents cités :
**EP-A- 0 055 164**
**DE-A- 1 064 925**
**FR-A- 2 242 144**
**FR-A- 2 481 254**
**US-A- 2 881 051**
**US-A- 3 931 393**
**US-A- 4 070 413**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Dupin, Thierry**
**7, rue Robert de Luzarches**
**F-95140 Garges-lès-Gonesse (FR)**

(74) Mandataire : **Savina, Jacques et al**
**RHONE-POULENC INTERSERVICES Service Brevets Chimie 25, quai Paul Doumer**
**F-92408 Courbevoie Cédex (FR)**

**EP 0 115 449 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'un catalyseur d'oxydation. Elle concerne plus particulièrement un procédé de préparation d'un catalyseur d'oxydation utilisé dans la transformation de l'hydrogène sulfuré en soufre.

L'invention concerne également le catalyseur ainsi obtenu de même que l'utilisation de ce catalyseur pour le traitement d'un gaz dont la teneur en $H_2S$ peut être plus particulièrement comprise entre 3 et 35 %.

La transformation de l'hydrogène sulfuré est effectuée selon un procédé classique qui comporte deux étapes de réaction :

$$H_2S + 3/2\ O_2 \longrightarrow SO_2 + H_2O$$

$$SO_2 + 2\ H_2S \rightleftarrows 3/_x\ S_x + 2\ H_2O$$

La première étape consiste à oxyder l'hydrogène sulfuré en anhydride sulfureux.

La deuxième étape est une étape de conversion catalytique réalisée classiquement au moyen d'un catalyseur CLAUS bien connu de l'homme de métier au contact duquel $SO_2$ réagit avec $H_2S$ pour former du soufre.

Dans les unités classiques de production de soufre à partir de « gaz acide », c'est-à-dire de gaz contenant de l'hydrogène sulfuré provenant soit du gaz naturel, soit du gaz de raffinerie, la première étape est une étape thermique. On introduit dans un réacteur le gaz acide et de l'oxygène en quantité stœchiométrique de manière à obtenir à la sortie du réacteur un effluent composé de 1/3 de $SO_2$ et de deux tiers de $H_2S$. Il y a en même temps formation d'une quantité de soufre vapeur qu'il est nécessaire d'éliminer avant de passer à la deuxième étape c'est-à-dire à la catalyse CLAUS.

L'étape thermique d'oxydation de $H_2S$ en présence d'air ou d'oxygène se réalise à une température minimale de 900 °C. Cette température est facile à maintenir car la réaction est très exothermique à condition que la quantité d'hydrogène sulfuré dans le gaz à traiter atteigne 15 % et de préférence au moins 35 % en volume.

Pour des valeurs inférieures à cette limite, il n'est pas possible de maintenir une température de flamme suffisante pour obtenir une combustion stable sans avoir recours à des modifications importantes.

Aussi depuis de nombreuses années, on cherche à résoudre le problème consistant à épurer les gaz acides contenant moins de 35 % d'$H_2S$ en volume sans être obligé de dépenser des quantités énormes d'énergie afin de maintenir la température de flamme à au moins 900 °C.

Il est connu d'après le brevet US-A 4 092 404 d'effectuer cette étape d'oxydation en utilisant un catalyseur d'oxydation à base de vanadium déposé sur un support réfractaire poreux non alcalin. Cette réaction d'oxydation doit être réalisée en opérant strictement à une température inférieure à 450 °C (850° F) et concerne des gaz dont la teneur en $H_2S$ est inférieure à 3 %.

Or, la réaction d'oxydation de $H_2S$ en $SO_2$ est fortement exothermique ce qui exige un système de contrôle de température complexe et de lourdes contraintes technologiques. A des températures supérieures à 450 °C le catalyseur est rapidement désactivé.

La demande de brevet européen EP-A 55164 décrit un traitement hydrothermal d'agglomérés d'alumine active qui peuvent être utilisés comme support de catalyseurs. Toutefois, ce document n'envisage pas le problème de l'obtention d'un catalyseur d'oxydation de gaz acide contenant de 3 à 35 % d'$H_2S$ qui ne se désactive pas à haute température. A fortiori aucune indication n'est donnée sur la nature de la phase catalytique qui pourrait être utilisée dans un tel cas.

La demande de brevet français FR-A 2.481.254 concerne la transformation en $SO_2$ d'un gaz essentiellement constitué de COS, $CS_2$, mercaptans et éventuellement de $H_2S$ mais dans des quantités de l'ordre de 1 % ou moins. Il s'agit donc d'une réaction différente de celle visée dans l'invention, les catalyseurs décrits comprenant un support contenant au moins 50 % de $TiO_2$, $ZrO_2$, $SiO_2$ ou de zéolite.

Il est d'autre part connu dans la demande de brevet européen EP-A 39266 d'oxyder les effluents industriels contenant du soufre en dioxyde de soufre par oxydation catalytique à l'aide d'un métal par exemple de fer associé à un support poreux. Ce catalyseur ne permet pas d'opérer à une température plus élevée que celle du brevet précédemment cité. D'autre part, le procédé décrit dans ce brevet concerne exclusivement l'oxydation d'hydrogène sulfuré en dioxyde de soufre et ne concerne en aucune façon la réaction simultanée entre l'hydrogène sulfuré et le dioxyde de soufre afin de produire du soufre.

Les gaz à faible teneur en $H_2S$ sont facilement traités par oxydation catalytique car ils n'entraînent pas une élévation importante de la température du catalyseur ; mais lorsque la teneur en $H_2S$ dépasse 3 % en volume, il y a augmentation de la température du catalyseur et désactivation de ce dernier.

Ainsi, il est possible à la lecture de l'art antérieur de traiter des gaz contenant une teneur en $H_2S$ supérieure à 35 % en volume par une étape uniquement thermique, ou une teneur en $H_2S$ inférieure à 3 % par une étape uniquement catalytique mais l'art antérieur ne résout pas le problème qui consiste à traiter des gaz ayant une teneur en $H_2S$ comprise entre 3 et 35 %. Le but atteint par la présente invention est de

pouvoir disposer d'un catalyseur permettant d'augmenter les rendements en soufre du réacteur catalytique et qui présente une excellente activité au cours du temps, aux hautes températures et plus particulièrement dans l'intervalle compris entre 700 et 1 000 °C.

La présente invention concerne en effet un procédé de préparation d'un catalyseur d'oxydation de gaz acide, permettant le traitement de gaz ayant une teneur en $H_2S$ notamment comprise entre 3 et 35 % caractérisé en ce que dans une première étape, on forme un support d'alumine active ayant au moins en partie subi un traitement hydrothermal, dans une deuxième étape, on imprègne ce support avec une phase catalytiquement active choisie parmi les oxydes d'au moins un des métaux suivants : Fe, Cu, Ag, W, Co, Ni, Bi, Cr, Cd et en ce qu'on introduit à l'une quelconque des étapes précitées au moins un composé choisi parmi les oxydes de terres rares, les oxydes d'alcalino-terreux, l'oxyde de zirconium, la silice ou au moins un précurseur de ces composés.

Le traitement hydrothermal de la première étape peut être effectué :

soit sur une poudre d'alumine active présentant une structure mal cristallisée et/ou amorphe obtenue à partir de bayérite, hydrargillitte, nordstrandite, boehmite ou de diaspore par déshydratation très rapide tel que décrit par exemple dans le brevet US-A 2 915 365

soit sur des agglomérés d'alumine obtenus par exemple à partir d'une poudre d'alumine active présentant une structure mal cristallisée et/ou amorphe et agglomérée tel que décrit notamment dans le brevet français FR-A 1 438 497 ou le brevet US 2 881 051.

Le traitement hydrothermal consiste à traiter en phase vapeur ou en phase liquide les agglomérés d'alumine ou la poudre d'alumine présentant une structure mal cristallisée et/ou amorphe par un milieu aqueux constitué d'un acide et/ou d'un sel qui se dissocie dans l'eau pour donner une solution ayant un pH inférieur à 9. Ce traitement est en particulier décrit dans le brevet européen n° 15196 lorsqu'il est appliqué à une poudre d'alumine active présentant une structure mal cristallisée et/ou amorphe. Une forme de mise en œuvre particulière en est décrite dans la demande de brevet européen EP-A 55 164 lorsqu'il est appliqué à des agglomérés d'alumine active.

Le traitement hydrothermal est effectué à une température comprise entre 80 °C et 250 °C pendant une période comprise entre environ quelques minutes et 36 heures.

Lorsque l'on part de poudre d'alumine active présentant une structure mal cristallisée et/ou amorphe, la mise en forme du support d'alumine active peut être notamment réalisée suivant les techniques connues de l'homme de l'art comme par exemple selon la technique dite « oil drop », ou par extrusion.

La technique de mise en forme par extrusion est décrite par exemple dans le brevet US-A 4 120 942. La technique de mise en forme par « oil drop » est décrite par exemple dans la demande de brevet européen EP-A 15801.

La technique de mise en forme par « oil drop » consiste :

dans une première étape à préparer un mélange à un pH inférieur à 7,5 d'une part de 10 à 90 % en poids d'un sol d'alumine ultrafine provenant du traitement hydrothermal de la poudre d'alumine active présentant la structure mal cristallisée et/ou amorphe et d'autre part de 10 à 90 % en poids (rapporté aux solides totaux) de particules sphéroïdales d'alumine n'ayant pas nécessairement subi le traitement hydrothermal

dans une deuxième étape à mettre en forme par coagulation des gouttes du mélange, par exemple par introduction des gouttes du mélange dans un liquide non miscible à l'eau tel que le pétrole qui forme des particules sphériques qui sont coagulées par un agent gélifiant tel que l'ammoniaque puis séchées.

Les agglomérés ou les alumines mises en forme par la technique « oil drop » ou par extrusion sont ensuite calcinés à une température entre 500 et 1 000 °C et constituent les supports d'alumine active de la présente invention.

Le support d'alumine active obtenu a au moins en partie subi un traitement hydrothermal. La technique de mise en forme par extrusion peut se faire à partir d'un mélange comprenant une poudre d'alumine active présentant une structure mal cristallisée et/ou amorphe ayant subi le traitement hydrothermal ci-dessus décrit et comprenant éventuellement une poudre d'alumine ne l'ayant pas subi. La technique de mise en forme par « oil drop » peut se faire à partir d'un sol d'alumine active provenant d'une alumine ayant subi un traitement hydrothermal et de particules sphéroïdales n'ayant pas subi ce traitement ou de particules sphéroïdales l'ayant subi. Le support ainsi obtenu contient toujours une quantité minimale d'alumine ayant subi le traitement hydrothermal qui est de 10 % et peut contenir jusqu'à 100 % d'alumine traitée thermiquement ; cette quantité est de préférence comprise entre 30 et 100 %.

Selon un premier mode d'introduction des composés selon l'invention, on peut introduire ceux-ci ou leurs précurseurs au cours de la première étape du procédé de préparation de catalyseur d'oxydation de gaz acide, lors du traitement hydrothermal. Cette introduction se fait dans le milieu aqueux tel que défini précédemment et constitué d'un acide et/ou d'un sel qui se dissocie dans l'eau pour donner une solution ayant un pH inférieur à 9.

Les composés pouvant être mis en œuvre dans le cadre de la présente invention sont choisis notamment parmi les oxydes de terres rares, de métaux alcalino-terreux, de zirconium ou la silice.

Selon un mode de mise en œuvre préféré de l'invention, les composés sont choisis parmi les oxydes de lanthane, néodyme, praséodyme, zirconium et la silice.

Il est possible sans sortir du cadre de la présente invention d'introduire un composé qui est un

précurseur des oxydes précités tels que par exemple les sels de terres rares, de zirconium ou d'alcalino-terreux décomposables à la chaleur ou les silicates organiques. Ces précurseurs devant au cours des opérations de calcination successives se transformer en oxydes désirés.

Ces oxydes ou leurs précurseurs peuvent être introduits seul ou en mélange entre eux.

La deuxième étape du procédé de l'invention consiste à introduire au niveau du support d'alumine active préalablement formé la phase catalytiquement active. Cette introduction peut se faire notamment par imprégnation soit avec des précurseurs des éléments catalytiquement actifs, soit par mélange des éléments catalytiquement actifs avec l'alumine au cours de la mise en forme du support d'alumine active.

Les éléments catalytiquement actifs sont choisis notamment parmi les oxydes des métaux suivants Fe, Cu, Ag, W, Co, Ni, Bi, Cr, Cd.

Il est particulièrement intéressant d'utiliser comme phase active l'oxyde de fer car il est industriellement disponible et d'un coût relativement réduit par rapport aux autres éléments utilisables.

Il est aussi parfaitement envisageable sans sortir de la présente invention d'utiliser un mélange des oxydes de ces métaux.

Selon un deuxième mode d'introduction des composés selon l'invention, les oxydes ou leurs précurseurs peuvent être introduits au cours de cette deuxième étape. Ils peuvent notamment être introduits par imprégnation séparément ou conjointement avec les éléments et les précurseurs des éléments catalytiquement actifs.

A la suite de cette deuxième étape, le catalyseur est calciné à une température située entre 300 et 1 000 °C de préférence entre 500 °C et 800 °C.

Les quantités d'oxydes de terres rares, de métaux alcalino-terreux, de zirconium ou la silice introduite représentent entre 0,5 et 20 % en poids d'oxyde par rapport à la masse totale du catalyseur et de préférence entre 1 et 7 %.

Les quantités de phase catalytiquement active introduites représentent entre 1 et 15 % du poids du catalyseur exprimées en poids d'oxyde de métaux et de préférence entre 3 et 10 %.

Le catalyseur obtenu par le présent procédé présente les caractéristiques suivantes :

Sa surface spécifique (SBE) est supérieure à 40 $m^2/g$ et de préférence entre 80 et 200 $m^2/g$ ; sa densité de remplissage tassé (DRT) est comprise entre 0,38 et 0,9 $g/cm^3$ ; son volume poreux total (VPT) est compris entre 1,30 à 0,3 $cm^3/g$.

Ces caractéristiques sont déterminées ainsi qu'il est défini dans la demande de brevet européen n° 55164.

Le présent catalyseur est utilisé pour traiter le gaz acide c'est-à-dire pour assurer la transformation au moins partielle de l'hydrogène sulfuré en soufre. Il permet d'une part d'assurer une production optimale de soufre par rapport aux procédés classiques et d'autre part de fournir un effluent sortant du réacteur catalytique qui présente une concentration en hydrogène sulfuré par rapport au dioxyde de soufre de 2. Ce rapport de 2 est obtenu à condition d'avoir des débits de gaz en $H_2S$ et en oxygène permettant d'assurer la stœchiométrie.

Ce catalyseur permet de traiter des gaz acides contenant des quantités d'hydrogène sulfuré inférieures à 35 % et tout particulièrement comprises entre 3 et 15 % en volume.

Ce catalyseur capable de traiter ces gaz acides faiblement concentrés en hydrogène sulfuré peut néanmoins contrairement à un préjugé technique établi supporter sans détérioration des températures très élevées notamment comprises entre 700 et 1 000 °C, températures auxquelles l'activité du catalyseur est optimale.

Les temps de contact du milieu réactionnel gazeux avec le catalyseur d'oxydation peuvent aller de 0,5 à 10 secondes, ces valeurs étant données dans les conditions standards de pression et de température.

Le gaz sortant du four catalytique est composé de deux parties de $H_2S$ pour une partie de $SO_2$ et d'une quantité plus ou moins importante de soufre vapeur selon les conditions de réaction : température, débit des gaz, quantité de catalyseur. Ce gaz est épuré de soufre vapeur par condensation puis réchauffé avant de passer sur une série de réacteurs CLAUS dans lesquels $SO_2$ réagit avec $H_2S$ afin de former une nouvelle quantité de soufre, ne laissant échapper dans l'atmosphère qu'un gaz contenant une quantité minime de soufre total.

Exemple 1 — Exemple comparatif

On utilise comme alumine de départ une alumine activée de structure mal cristallisée et/ou amorphe obtenue par déshydratation rapide d'hydrargillite dans un courant de gaz chauds dont la température d'entrée est d'environ 800 °C, le temps de contact est d'environ 0,5 seconde.

Après broyage, cette poudre est agglomérée sous forme de billes à l'aide d'un bol tournant. A cet effet, on introduit simultanément de la poudre et de l'eau dans le bol en rotation. Les billes formées sont retirées en continu par éjection due à la force centrifuge.

Après séchage à 110 °C, les billes sont calcinées à 800 °C, sous air. On obtient ainsi un support d'alumine active n'ayant subi aucun traitement hydrothermal.

On imprègne les billes obtenues par une solution de nitrate ferrique de telle manière que le catalyseur obtenu après séchage et calcination à 800 °C contienne 5 % de phase catalytiquement active sous forme $Fe_2O_3$. Les caractéristiques du catalyseur sont les suivantes :

SBE = 105 $m^2g^{-1}$
DRT = 0,79 $g/cm^3$
VPT = 0,45 $cm^3/g$

Le support d'alumine utilisé dans cet exemple n'a subi aucun traitement hydrothermal et on n'y a introduit aucun composé choisi parmi les oxydes de terres rares, les oxydes d'alcalino-terreux, l'oxyde de zirconium, la silice ou leurs précurseurs.

Exemple 2

On traite les billes obtenues tel que décrit dans l'exemple n° 1 de la demande de brevet européen EP-A 55 164 de la manière suivante.

On imprègne les billes par une solution contenant du nitrate de lanthane, du nitrate de néodyme et du nitrate ferrique de manière à obtenir la composition suivante rapportée au poids du catalyseur :

$Fe_2O_3$ = 5 %
$La_2O_3$ = 1 %
$Nd_2O_3$ = 1 %

Après séchage et calcination à 800 °C sous air, le catalyseur a les caractéristiques suivantes :

SBE = 103 $m^2g^{-1}$
DRT = 0,46 $g/cm^3$
VPT = 0,97 $cm^3/g$

La totalité de l'alumine constituant le support d'alumine active utilisé a subi un traitement hydrothermal.

Exemple 3

On fabrique un support constitué de billes d'alumine active par le procédé oil-drop décrit dans la demande de brevet européen EP-A 15 801 en utilisant les sources d'alumine suivantes :

La première est un sol d'alumine ultrafine obtenue tel que décrit dans l'exemple n° 3 de la demande de brevet européen EP-A 15 196 avant calcination. Il s'agit donc d'une alumine active de structure mal cristallisée et/ou amorphe ayant subi un traitement hydrothermal.

La deuxième est l'alumine active telle que décrite dans l'exemple 1 de la demande de brevet européen n° 15 801 utilisée comme particule sphéroïdale. Cette alumine n'a subi aucun traitement hydrothermal.

On mélange ces deux sources d'alumine dans de l'eau et on ajuste le pH à 6. La proportion des deux sources d'alumine en poids est de 30 % pour la 1re et 70 % pour la seconde, compté en $Al_2O_3$.

Après égouttage, séchage, calcination, on obtient les billes que l'on traite de la manière suivante.

On imprègne les billes par une solution alcoolique de silicate d'éthyle, de manière à obtenir un produit contenant 2,2 % de $SiO_2$. Après séchage et calcination à 500 °C sous atmosphère inerte, on procède à une deuxième imprégnation par une solution de nitrate de cuivre et de nitrate d'argent de manière à ce que, après séchage et calcination à 800 °C, le catalyseur ait la composition suivante :

$SiO_2$ = 2 %
CuO = 2 %
$Ag_2O$ = 3 %

Les caractéristiques du catalyseur obtenu sont les suivantes :

SBE = 137 $m^2g^{-1}$
DRT = 0,47 $g/cm^3$
VPT = 0,97 $cm^3/g$

30 % de l'alumine constituant le support d'alumine active a subi un traitement hydrothermal.

Exemple 4

On utilise l'alumine ultrafine tel que décrit dans l'exemple n° 2 de la demande de brevet européen n° 15 196, cette alumine est issue du traitement hydrothermal d'une poudre d'alumine active présentant une structure mal cristallisée et/ou amorphe ; cette alumine est malaxée en présence d'eau et on incorpore à la pâte obtenue une poudre d'oxyde de fer sous forme $Fe_2O_3$ très finement broyée. Le

mélange ainsi obtenu est extrudé, séché et calciné à 600 °C.

Le produit obtenu est alors imprégné de nitrate de baryum puis séché et calciné à 800 °C.

Le catalyseur ainsi obtenu a la composition et les caractéristiques suivantes :

BaO : 2,5 %
$Fe_2O_3$ : 10 %
SBE : 119 $m^2g^{-1}$
DRT : 0,65 $g/cm^3$
VPT : 0,61 $cm^3/g$

La totalité de l'alumine constituant le support d'alumine activée utilisé a subi un traitement hydrothermal.

Exemple 5

Le support d'alumine active utilisé à l'exemple n° 2 ci-dessus est imprégné par une solution d'oxychlorure de zirconium de manière à obtenir un produit contenant 4,2 % en poids de $ZrO_2$ après séchage et calcination à 800 °C.

Le produit obtenu est alors imprégné d'acide chromique de manière à obtenir un catalyseur de la composition suivante après séchage et calcination à 800 °C

$ZrO_2$ : 4,0 %
$Cr_2O_3$ : 5,0 %

Les caractéristiques du catalyseur sont les suivantes :

SBE : 99 $m^2g^{-1}$
DRT : 0,47 $g/cm^3$
VPT : 0,98 $cm^3/g$

La totalité de l'alumine constituant le support d'alumine active utilisé a subi un traitement hydrothermal.

Exemple 6

On prépare une série de catalyseurs à partir du support d'alumine active tel que décrit dans l'exemple n° 2 ci-dessus et contenant 2,2 % d'oxyde de lanthane introduit par imprégnation d'une solution de nitrate de lanthane, séchage et calcination à 700 °C.

Ces catalyseurs sont obtenus par imprégnation de solution contenant les précurseurs de la phase active. Le tableau suivant indique les précurseurs, la composition et les caractéristiques des catalyseurs obtenus après séchage et calcination à 800 °C sous air.

| Catalyseur N° | Précurseur de la phase active | Composition | | SBE | DRT | VPT |
|---|---|---|---|---|---|---|
| | | $La_2O_3$ | Phase active | | | |
| 6 | acide méta tungstique | 2 % | $WO_3$ = 7 % | 99 | 0,47 | 95 |
| 7 | nitrate de cobalt | 2 % | CoO = 6 % | 101 | 0,46 | 96 |
| 8 | nitrate de nickel | 2 % | NiO = 8 % | 95 | 0,46 | 96 |
| 9 | nitrate de bismuth + $HNO_3$ | 2 % | $Bi_2O_3$ = 9% | 96 | 0,47 | 94 |
| 10 | Chlorure de cadmium | 2% | CdO = 7 % | 103 | 0,46 | 96 |

Exemple 7

On introduit dans un réacteur de laboratoire un gaz ayant la composition suivante :

$H_2S$ = 12 %
$O_2$ = 6 %
$CO_2$ = 45 %
$N_2$ = 30 %
$H_2O$ = 7 %

En fonctionnement isotherme la température du réacteur est fixée à 850 °C et la vitesse des gaz telle que la vitesse volumique soit de 900 $h^{-1}$ calculée dans les conditions normales.

On compare les catalyseurs en mesurant l'activité de conversion de $H_2S$ par le rapport $H_2S/SO_2$ en sortie du réacteur catalytique après 8 heures et après 100 heures de fonctionnement et en mesurant le rendement en soufre obtenu.

| Catalyseur N° | Après 8 heures | | Après 100 heures | |
|---|---|---|---|---|
| | Rendement en soufre % | $H_2S/SO_2$ | Rendement en soufre % | $H_2S/SO_2$ |
| 1 | 58 | 2,0 | 34 | 1,8 |
| 2 | 59 | 2,0 | 57 | 1,99 |
| 3 | 58 | 2,0 | 52 | 1,99 |
| 4 | 58 | 2,0 | 55 | 1,97 |
| 5 | 57 | 2,0 | 53 | 1,96 |
| 6 | 58 | 2,0 | 56 | 1,99 |
| 7 | 58 | 2,0 | 55 | 1,98 |
| 8 | 57 | 2,0 | 52 | 1,95 |
| 9 | 58 | 2,0 | 54 | 1,99 |
| 10 | 58 | 2,0 | 53 | 1,97 |

Ces résultats prouvent avec évidence que tous les catalyseurs de l'invention présentent une activité au cours du temps bien supérieure aux catalyseurs connus pour traiter des gaz acides ayant une teneur en $H_2S$ comprise entre 3 et 35 % et à une température supérieure à 450 °C et plus particulièrement comprise entre 700 et 1 000 °C.

**Revendications**

1. Procédé de préparation de catalyseur d'oxydation de gaz acide permettant le traitement de gaz ayant une teneur en $H_2S$ notamment comprise entre 3 et 35 %, caractérisé en ce que dans une première étape on forme un support d'alumine active ayant au moins en partie subi un traitement hydrothermal, dans une deuxième étape on imprègne ce support avec une phase catalytiquement active choisie parmi les oxydes d'au moins un des métaux suivants : Fe, Cu, Ag, W, Co, Ni, Bi, Cr, Cd et en ce qu'on introduit à l'une quelconque des étapes précitées au moins un composé choisi parmi les oxydes de terres rares, les oxydes d'alcalino-terreux, l'oxyde de zirconium, la silice ou au moins un précurseur de ces composés.

2. Procédé selon la revendication 1 caractérisé en ce que dans la première étape, on forme le support d'alumine active par agglomération de poudre d'alumine active présentant une structure mal cristallisée et/ou amorphe et que l'on procède à un traitement hydrothermal.

3. Procédé selon la revendication 1 caractérisé en ce que dans la première étape, on fait subir le

traitement hydrothermal à la poudre d'alumine active présentant une structure mal cristallisée et/ou amorphe et que l'on procède ensuite à la mise en forme.

4. Procédé selon la revendication 3 caractérisé en ce que la mise en forme est faite par mélange de l'alumine active ayant subi le traitement hydrothermal avec une alumine active n'ayant pas nécessairement subi le traitement et mise en forme selon l'un des deux procédés suivants : extrusion ou « oil drop ».

5. Procédé selon la revendication 1 caractérisé en ce que dans la deuxième étape, la phase catalytiquement active choisie est l'oxyde de fer.

6. Procédé selon la revendication 1 caractérisé en ce que le composé introduit est choisi parmi les oxydes de lanthane, de néodyme, de praséodyme, de zirconium et la silice.

7. Procédé selon la revendication 1 caractérisé en ce que la quantité de phase catalytiquement active introduite varie de 1 à 15 % du poids catalyseur et de préférence entre 3 et 10 %.

8. Procédé selon la revendication 1 caractérisé en ce que la quantité d'oxyde de terres rares, d'alcalino-terreux, de zirconium ou la silice introduite varie de 0,5 à 20 % en poids d'oxyde par rapport au poids du catalyseur et de préférence entre 1 et 7 %.

9. Procédé de traitement de gaz acide pour l'oxydation de l'hydrogène sulfuré en anhydride sulfureux caractérisé en ce qu'en vue de traiter un gaz ayant une teneur en $H_2S$ comprise entre 3 et 35 % on utilise un catalyseur préparé selon l'une quelconque des revendications précédentes.

## Claims

1. Process for preparing a catalyst for the oxidation of sour gas permitting the treatment of gas having an $H_2S$ content in particular between 3 and 35 %, characterized in that, in a first stage, a support of active alumina which has been at least partly subjected to a hydrothermal treatment is formed, in a second stage this support is impregnated with a catalytically active phase chosen from the oxides of at least one of the following metals : Fe, Cu, Ag, W, Co, Ni, Bi, Cr and Cd and in that in either of the abovementioned stages there is introduced at least one compound chosen from rare-earth oxides, alkaline-earth oxides, zirconium oxide and silica or at least one precursor of these compounds.

2. Process according to Claim 1, characterized in that, in the first stage, the active alumina support is formed by agglomeration of active alumina powder which has a poorly crystallized and/or amorphous structure and that a hydrothermal treatment is carried out.

3. Process according to Claim 1, characterized in that, in the first stage, the active alumina powder which has a poorly crystallized and/or amorphous structure is subjected to the hydrothermal treatment and in that forming in then carried out.

4. Process according to Claim 3, characterized in that the forming is carried out by mixing the active alumina which has undergone the hydrothermal treatment with an active alumina which has not necessarily undergone the treatment and forming according to one of the following two processes : extrusion or « oil drop ».

5. Process according to Claim 1, characterized in that, in the second stage, the catalytically active phase which is chosen is iron oxide.

6. Process according to Claim 1, characterized in that he compound introduced is chosen from Lanthanum, neodymium, praseodymium and zirconium oxides and silica.

7. Process according to Claim 1, characterized in that the quantity of catalytically active phase which is introduced varies from 1 to 15 % of the weight of the catalyst and preferably between 3 and 10 %.

8. Process according to Claim 1, characterized in that the quantity of rare-earth, alkaline-earth or zirconium oxides or of silica which is introduced varies from 0.5 to 20 % by weight of oxide based on the weight of the catalyst and preferably between 1 and 7 %.

9. Process for the treatment of sour gas for the oxidation of hydrogen sulphide to sulphur dioxide, characterized in that a catalyst prepared according to any one of the preceding claims is used with a view to treating a gas having an $H_2S$ content of between 3 and 35 %.

## Patentansprüche

1. Verfahren zur Herstellung eines Katalysators zur Oxidation von saurem Gas, der die Behandlung von Gas mit einem Gehalt an $H_2S$ insbesondere zwischen 3 und 35 % ermöglicht, dadurch gekennzeichnet, daß in einem ersten Schritt ein Träger aus aktivem Aluminiumoxid gebildet wird, der mindestens teilweise einer hydrothermalen Behandlung unterzogen wurde, daß in einem zweiten Schritt dieser Träger mit einer aktiven katalytischen Phase, ausgewählt aus den Oxiden mindestens eines der folgenden Metalle : Fe, Cu, Ag, W, Co, Ni, Bi, Cr, Cd imprägniert wird und daß man in einem der vorgenannten Schritte mindestens eine Verbindung, ausgewählt aus den Oxiden der seltenen Erden, den Erdalkalioxiden, Zirkoniumoxid und Siliziumdioxid oder mindestens einen Vorläufer dieser Verbindungen einbringt.

2. Verfahren nach Anspruch 1, dadurch gekennzeichnet, daß man im ersten Schritt durch Agglomeration von pulferförmigem/aktivem Aluminiumoxid mit einer wenig kristallinen und/oder amorphen Struktur den Träger aus aktivem Aluminiumoxid bildet und daß man eine hydrothermale Behandlung vornimmt.

3. Verfahren nach Anspruch 1, dadurch gekennzeichnet, daß man im ersten Schritt das Pulver von aktivem Aluminiumoxid mit einer wenig kristallinen und/oder amorphen Struktur einer hydrothermalen Behandlung unterzieht und daß man anschließend die Formgebung vornimmt.

4. Verfahren nach Anspruch 3, dadurch gekennzeichnet, daß die Formgebung durch Vermischen von aktivem Aluminiumoxid, das der hydrothermalen Behandlung unterzogen wurde, mit einem aktiven Aluminiumoxid, das nicht notwendigerweise der Behandlung und Formgebung nach einem der beiden folgenden Verfahren unterzogen wurde : Extrusion oder « oil drop ».

5. Verfahren nach Anspruch 1, dadurch gekennzeichnet, daß die im ersten Schrit ausgewählte katalytisch aktive Phase Eisenoxid ist.

6. Verfahren nach Anspruch 1, dadurch gekennzeichnet, daß die eingebrachte Verbindung aus den Oxiden des Lanthans, Neodyms, Praseodyms, Zirkoniums und Siliziumdioxid ausgewählt wird.

7. Verfahren nach Anspruch 1, dadurch gekennzeichnet, daß die eingebrachte Menge der katalytisch aktiven Phase zwischen 1 und 15 % bezogen auf das Gewicht des Katalysators, vorzugsweise zwischen 3 und 10 % variiert.

8. Verfahren nach Anspruch 1, dadurch gekennzeichnet, daß die eingebrachte Menge des Oxids der seltenen Erden, der Erdalkalimetalle, des Zirkoniums oder des Siliziumdioxids, 0,5 bis 20 Gew.%, vorzugsweise 1 bis 7 Gew.% Oxid bezogen auf das Gewicht des Katalysators, beträgt.

9. Verfahren zur Behandlung von saurem Gas zur Oxidation des Schwefelwasserstoffs in Schwefeldioxid, dadurch gekennzeichnet, daß man zwecks Behandlung eines Gas mit einem Gehalt an $H_2S$ zwischen 3 und 35 % einen gemäß einem der vorhergehenden Ansprüche hergestellten Katalysator verwendet.